# EUROPÄISCHE PATENTANMELDUNG

(11) **EP 1 521 438 A1**
(43) Veröffentlichungstag der Anmeldung: **06.04.2005**
(21) Anmeldenummer: 04101394.7
(22) Anmeldetag: 05.04.2004
(51) Int. Cl.: H04M 1/73, H04M 1/725, H04Q 7/18, G06F 1/32

(54) **Verfahren zur Sicherstellung des Betriebs eines Mobilfunkgerätes durch Deaktivierung von Anwendungen bei Verringerung der Batterieladung**

(30) Priorität: 30.09.2003 DE 10345437
(71) Anmelder: SIEMENS AKTIENGESELLSCHAFT, 80333 München (DE)
(72) Erfinder: Maurer, Gerhard, 82110, Germering (DE); Müller-Eschenbach, Ralph, 85521, Ottobrunn (DE); Schöpf, Heike, 82194, Gröbenzell (DE)

(57) **Zusammenfassung**

Die Erfindung betrifft ein Verfahren zum Betrieb eines Mobilfunkendgerätes mit einem Betriebssystem, wobei im Mobilfunkendgerät eine Mehrzahl von Anwendungen (7.1 bis 7.x und 8 bis 24) vorliegen, die in Anwenderprofilen (25.1 bis 25.x) individuell und/oder vorkonfiguriert aktiviert werden, bei dem zumindest eine Anwendung (7.1 bis 7.x und 8 bis 24), die im Mobilfunkendgerät aktiv ausgeführt wird oder in einem Bereitschaftszustand ist, zumindest eine elektrische Komponente (36.1 bis 36.x) verwendet und dadurch Energie des Mobilfunkendgeräteakkus verbraucht.

Die Erfindung zeichnet sich dadurch aus, dass die Anwendungen (7.1 bis 7.x und 8 bis 24) in den Anwenderprofilen (25.1 bis 25.x) in einer vom Mobilfunkendgerätenutzer frei wählbaren oder einer vorgegebenen Reihenfolge vom Betriebssystem aktiviert oder deaktiviert werden, wobei zumindest eine Spannungsschwelle (33.1 und 33.2) zum Aktivieren/Deaktivieren von zumindest einer Anwendung (7.1 bis 7.x und 8 bis 24) abhängig von der Energiesituation des Mobilfunkendgeräteakkus individuell bestimmt wird.

## Beschreibung

Die Erfindung betrifft ein Verfahren zum Betrieb eines Mobilfunkendgerätes mit einem Betriebssystem, wobei im Mobilfunkendgerät eine Mehrzahl von Anwendungen vorliegen, die in Anwenderprofilen individuell und/oder vorkonfiguriert aktiviert werden, bei dem zumindest eine Anwendung, die im Mobilfunkendgerät aktiv ausgeführt wird oder in einem Bereitschaftszustand ist, zumindest eine elektrische Komponente verwendet und dadurch Energie des Mobilfunkendgeräteakkus verbraucht.

In Mobilfunkendgeräten, zum Beispiel für GSM oder WCDMA, gibt es eine Vielzahl von Anwendungen, welche, wenn sie aktiv ausgeführt werden, einen erheblichen Energiebedarf haben. Wird das Mobilfunkendgerät durch einen Akkumulator versorgt, setzen diese aktiven Anwendungen, in Abhängigkeit des Funktionsumfangs jeder einzelnen Anwendung, die Verfügbarkeitsdauer (Standby-Zeit) im Bereitschaftszustand und die Betriebsdauer eines Mobilfunkendgerätes herab.

Trotz des unvermeidlichen Energieverbrauchs der Anwendungen, ist es im Entwicklungskonzept zukünftiger Mobilfunkendgeräte geplant, zusätzliche Anwendungen, zum Beispiel Kamera oder Bluetooth, neben den Grundfunktionen, wie der Sprachtelephonie, im Mobilfunkendgerät zu integrieren. Aufgrund des dadurch hervorgerufenen höheren Energiebedarfs dieser Mobilfunkendgeräte werden Energiespeicher mit höherer Kapazität benötigt oder es verkürzen sich die Zeiten sowohl für den Bereitschaftszustand als auch den Betriebszustand des Mobilfunkendgerätes. Höhere Akkukapazitäten verursachen in der Regel auch größere Abmessungen, ein höheres Akkugewicht sowie höhere Kosten für den Mobilfunkend geräteakku. Dies steht aber dem Trend nach besonders kompakten und kostengünstigen Mobilfunkendgeräten entgegen.

Es ist daher Aufgabe der Erfindung, ein Verfahren zum Betrieb eines Mobilfunkendgerätes mit einem Betriebsystem vorzustellen, bei dem die Kapazität des bestehenden Mobilfunkendgeräteakkus besser ausgenutzt wird.

Diese Aufgabe wird durch die Merkmale des unabhängigen Verfahrensanspruchs 1 gelöst. Vorteilhafte Weiterbildungen der Erfindung sind Gegenstand untergeordneter Patentansprüche.

Die Erfinder haben erkannt, dass teilweise für eine bestimmte Nutzergruppe eines Mobilfunkendgerätes nur bestimmte Anwendungen von Bedeutung sind. Jedoch muss bei bisherigen Mobilfunkendgeräten die Energie für die eventuelle Aktivierung aller Anwendungen und damit einhergehend die Aktivierung der von diesen Anwendungen verwendeten elektrischen Komponenten aufgebracht werden.

Das bisher bekannte Mobilfunkendgerät schaltet bei Erreichen eines bestimmten Abschaltspannungsschwellwertes vorzeitig in den Auszustand des Mobilfunkendgerätes, obwohl noch Restkapazität im Mobilfunkendgeräteakku vorhanden ist, um eine reduzierte Anzahl von Anwendungen auszuführen. Dieses vorzeitige Abschalten tritt noch früher bei tiefen Umgebungstemperaturen und/oder einem gealtertem Mobilfunkendgeräteakku auf. Außerdem wird der Abschaltvorgang durch einen höheren Innenwiderstand des Mobilfunkendgeräteakkus und durch Alterung der chemischen Substanzen im Akku begünstigt.

Bei bisher bekannten Mobilfunkendgeräten wird nach dem Schalten in den Auszustand, nicht wieder automatisch in den Bereitschaftszustand oder den Betriebszustand geschaltet. Der Nutzer von heutigen Mobilfunkendgeräten hat lediglich die Möglichkeit das abgeschaltete Mobilfunkendgerät manuell wieder einzuschalten und damit sämtliche Anwendungen einzuschalten und dann die nach dem vorherigen automatischen Ausschalten noch vorhandene Restkapazität, zum Beispiel für ein kurzes Telefonat, zum Beispiel ein Nottelefonat, zu nutzen.

Weiterhin hat der Mobilfunkendgerätenutzer keine genaue und dadurch unzureichende Information über die aktuelle Dauer des Betriebszustands und des Bereitschaftszustands des Mobilfunkendgerätes, insbesondere der Anwendungen des aktivierten Anwenderprofils, wodurch er die Restfunktion des Mobilfunkendgerätes bis zum Abschalten ohne Aufladung des Mobilfunkendgeräteakkus nicht einteilen oder beeinflussen kann.

Beispielsweise wird durch die Summe aller Ströme, die alle elektrischen Komponenten (Verbraucher) benötigen, die Data Transmission Time für UMTS-Betrieb bei einem gealterten Mobilfunkendgeräteakku und bei einer Umgebungstemperatur von minus 10 Grad Celsius bis auf wenige Minuten reduziert. Die Data Transmission Time entspricht der Talk Time (= Sprechzeit), nur dass hier die Zeit zur Datenübertragung gemessen wird.

Wenn einzelne oder mehrere Anwendungen gezielt vom Betriebssystem in Abhängigkeit der aktuellen Energiesituation des Mobilfunkendgerätesakkus aktiviert oder deaktiviert werden können, kann durch die Änderung der anliegenden Stromlast am Mobilfunkendgeräteakku, die Verfügbarkeitsdauer des Mobilfunkendgeräteakkus für die noch aktiven Anwendungen variiert werden.

Entsprechend diesem allgemeinen Erfindungsgedanken schlagen die Erfinder vor, das bekannte Verfahren zum Betrieb eines Mobilfunkendgerätes mit einem Betriebssystem, wobei im Mobilfunkendgerät eine Mehrzahl von Anwendungen vorliegen, die in Anwenderprofilen individuell und/oder vorkonfigu riert aktiviert werden, bei dem zumindest eine Anwendung, die im Mobilfunkendgerät aktiv ausgeführt wird oder in einem Bereitschaftszustand ist, zumindest eine elektrische Komponente verwendet und dadurch Energie des Mobilfunkendgeräteakkus verbraucht, dahingehend zu verbessern, dass die Anwendungen in den Anwenderprofilen in einer vom Mobilfunkendgerätenutzer frei wählbaren oder einer vorgegebenen Reihenfolge vom Betriebssystem aktiviert oder deaktiviert werden, wobei zumindest eine Spannungsschwelle zum Aktivieren/Deaktivieren von zumindest einer Anwendung abhängig von der Energiesituation des Mobilfunkendgeräteakkus individuell bestimmt wird.

Durch das Aktivieren oder Deaktivieren von Anwendungen, die in dem gewählten Anwenderprofil vorhanden sind, werden die elektrischen Komponenten, auf die diese aktivierten Anwendungen zugreifen oder die deaktivierten Anwendungen nicht mehr zugreifen, schrittweise zumindest teilweise zu-/abgeschaltet oder bereit geschaltet.

Durch das Festlegen einer Abschaltreihenfolge ist es nun individuell möglich, Anwendungen, die dem Mobilfunkendgerätenutzer besonders wichtig erscheinen, bis zum endgültigen Abschalten des Mobilfunkendgerätes, aktiv auszuführen. Beispielsweise kann ein Mobilfunkendgerätenutzer eine oder mehrere Anwendungen in einem Basisprofil integrieren. Das Basisprofil innerhalb des gewählten Anwenderprofils wird bis zum endgültigen Abschalten des Mobilfunkendgerätes aktiv ausgeführt. Die Anwendungen, die nicht im Basisprofil enthalten sind, die also für den Mobilfunkendgerätenutzer weniger wichtig sind, werden vorzeitig deaktiviert.

Diese Abschaltreihenfolge kann beispielsweise im Mobilfunkendgerät vorkonfiguriert sein oder durch den Mobilfunkendgerätenutzer festgelegt werden. Durch die Abschaltreihenfolge können Anwendungen und damit die verbundenen elektrische Komponenten, zum Beispiel nach Priorität oder aber auch abhängig vom Stromverbrauch und der (Betriebs) spannung der für die Anwendungen benötigten elektrischen Komponenten, abgeschaltet werden. Beim Stromverbrauch und der (Betriebs-)spannung müssen bestimmte Mindestwerte vorliegen, damit eine elektrische Komponente betrieben werden kann.

Neu an diesem Verfahren ist, das einzelne Anwendungen bereits vor dem endgültigen Abschalten des Mobilfunkendgerätes, deaktiviert werden können. Da durch das Deaktivieren von einer oder mehreren Anwendungen der Entladestrom des Mobilfunkendgeräteakkus gesenkt wird, kann dass Mobilfunkendgerät die noch aktiven Anwendungen länger ausführen.

Weiterhin eröffnet das neue Verfahren auch die Möglichkeit, bereits deaktivierte oder noch nicht aktivierte Anwendungen wieder zu aktivieren oder neu zu aktivieren. In bisher bekannten Mobilfunkendgeräten wurden bei Erreichen einer Abschaltspannungsschwelle sämtliche Anwendungen abgeschaltet. Ein automatisches Zuschalten/Bereitschalten von Anwendungen aus dem Auszustand war bisher nicht möglich. Lediglich ein manuelles wieder Einschalten des Mobilfunkendgerätes wurde ermöglicht.

So ist es im neuen Verfahren denkbar, dass aufgrund eines Umgebungswechsels und einer damit verbundenen Temperaturerhöhung des Mobilfunkendgeräteakkus, die Energiesituation des Mobilfunkendgeräteakkus sich verbessert, wodurch zusätzlich zu den aktuell aktiven Anwendungen weitere Anwendungen ausführbar sind. Im neuen Verfahren wird die verbesserte Energiesituation des Mobilfunkendgeräteakkus durch das Betriebssystem erkannt und eine deaktivierte/noch nicht aktivierte Anwendung kann zugeschaltet oder bereitgeschaltet werden.

Ab welchem Spannungsschwellwert eine Deaktivierung/Aktivierung einer oder mehrerer Anwendungen stattfin det, wird durch das Betriebssystem je nach aktueller Energiesituation des Mobilfunkendgeräteakkus individuell bestimmt.

Aber auch der Gesamtstromverbrauch, die Minimal- beziehungsweise die Maximalspannungsanforderung und die Minimalbeziehungsweise die Maximaltemperatur, die für ein bestimmtes Mobilfunkendgerät charakteristisch ist, kann bei der Deaktivierung/Aktivierung einer oder mehrerer Anwendungen mitberücksichtigt werden.

Es wird durch dieses neue Verfahren ein Strommanagement für den Mobilfunkendgeräteakku ermöglicht, bei dem die Kapazität und damit die Größe des Mobilfunkendgeräteakkus nicht notwendigerweise mit zunehmender Anzahl an Anwendungen größer werden muss. Vielmehr kann die Kapazität eines Mobilfunkendgeräteakkus gezielt für bestimmte Anwendungen beziehungsweise elektrische Komponenten genutzt werden.

Da die aktuelle Energiesituation des Mobilfunkendgeräteakkus entscheidend ist, ab welchem Spannungsschwellwert eine Deaktivierung/Aktivierung einer oder mehrerer Anwendungen stattfindet, werden nachfolgend einige Einflussgrößen aufgezählt, die bei der Berechnung der Spannungsschwellwerte durch das Betriebssystem einbezogen werden können.

Für das Verfahren ist es günstig, wenn die Spannungsschwelle zum Aktivieren/Deaktivieren zumindest einer Anwendung abhängig vom Ladezustand und der Restkapazität des Mobilfunkendgeräteakkus vom Betriebssystem berechnet wird. So wird durch den Ladezustand des Mobilfunkendgeräteakkus beispielsweise berücksichtigt, dass der aktuell messbare Spannungswert eines Mobilfunkendgerätesakkus abhängig von der anliegenden Stromlast ist. Je nach Anzahl und Stromverbrauch der aktiv ausgeführten Anwendungen kann die zu erwartende Mobilfunkendgerätespannung bereits vorherbe stimmt werden. Aus dem Ladezustand können dann die zu erwartenden Entladekurven vorberechnet werden.

Es ist weiterhin günstig, wenn die Spannungsschwelle zum Aktivieren/Deaktivieren zumindest einer Anwendung abhängig von der Lade-/Entladehistorie des Mobilfunkendgeräteakkus vom Betriebssystem berechnet wird. Die Lade/Entladehistorie kann beispielsweise die Anzahl der vollständigen Lade-/Entladezyklen, die Anzahl der abgebrochenen beziehungsweise unvollständigen Lade-/Entladezyklen und die Anzahl und Länge der Zeiträume zwischen diesen Zyklen beinhalten. Durch die Berücksichtigung der Lade/Entladehistorie kann somit eine dadurch bedingte Alterung des Mobilfunkendgeräteakkus einkalkuliert werden. Die Lade/Entladehistorie könnte beispielsweise bei jedem Mobilfunkendgeräteakku in Form einer Kennung abgespeichert sein. Wird nun ein solcher gekennzeichneter Mobilfunkendgerätakku in ein Mobilfunkendgerät eingebaut, so können die Daten dem Mobilfunkendgerät zu Verfügung gestellt werden.

Aber auch die Umgebungsbedingungen des Mobilfunkendgeräteakkus können bei der Berechnung der Spannungsschwelle zum Aktivieren/Deaktivieren zumindest einer Anwendung berücksichtigt werden. Unter Umgebungsbedingungen sind nicht nur die durch Witterung veränderbare Umgebung, sondern auch der Aufenthaltsort des Mobilfunkendgerätes, wie zum Beispiel im Bereich innerhalb eines Flugzeuges, innerhalb der S-Bahn oder in einem Kellergebäude, zu verstehen. So hat beispielsweise die aktuelle Umgebungstemperatur und eventuell auch die Luftfeuchtigkeit einen Einfluss auf die Energiesituation des Mobilfunkendgeräteakkus. Abhängig von den Umgebungsbedingungen, die zum Teil durch Sensoren des Mobilfunkendgerätes ermittelt werden können, kann sich der Mobilfunkendgeräteakku in einem Bereich der maximale, minima le oder optimale Betriebstemperatur befinden, in dem ein korrektes Funktionieren der elektrischen Komponenten gewährleistet werden kann. Für Umgebungsbedingungen, die nicht durch Sensoren zu bestimmen sind, kann der Mobilfunkendgerätenutzer durch Wahl eines entsprechenden Umgebungsprofils, zum Beispiel Profil Flugzeug oder Profil S-Bahn, das Mobilfunkendgerät an diese Umgebung anpassen. Sind die Umgebungsbedingungen bekannt oder werden diese bestimmt, beispielsweise durch Messung der Temperatur des Mobilfunkendgeräteakkus und der Umgebungstemperatur des Mobilfunkendgerätes, so kann die zu erwartende Spannung bei anliegender Last bestimmt werden.

Es ist außerdem vorteilhaft, wenn die Spannungsschwelle zum Aktivieren/Deaktivieren zumindest einer Anwendung abhängig von der Chemie des Mobilfunkendgeräteakkus vom Betriebssystem berechnet wird. Wobei unter Chemie des Mobilfunkendgeräteakkus beispielsweise zu verstehen ist, aus welchen Komponenten der Mobilfunkendgeräteakku aufgebaut ist. Beispielsweise zeigen Mobilfunkendgeräteakkus, die als Lithium-Polymer, Lithium-Ionen, Nickel-Metall-Hydrid oder Nickel-Cadmium aufgebaut sind, ein unterschiedliches Verhalten ihrer Spannungskennlinien bei verschiedenen Lasten unter den bisher genannten Parametern.

Aber auch die Kapazität des Mobilfunkendgeräteakkus kann vom Betriebssystem zur Berechnung der Spannungsschwelle zum Aktivieren/Deaktivieren zumindest einer Anwendung berücksichtigt werden. Ein Mobilfunkendgeräteakku wird von einem bestimmten Hersteller mit einer angegebenen Kapazität ausgeliefert. Aufgrund von Fertigungstoleranzen kann die tatsächlich gemessene Kapazität von der angegebenen Kapazität abweichen. Weiterhin kann bei bereits anliegender Stromlast die noch verbleibende Kapazität des Mobilfunkendgeräteakkus bestimmt werden. Sind diese Kapazitätswerte, wie Nominalka pazität und tatsächliche Maximalkapazität bekannt, kann das Verhalten des Mobilfunkendgeräteakkus unter verschiedenen Stromlasten besser vorherbestimmt werden.

Zur Berechnung der Spannungsschwelle zum Aktivieren/Deaktivieren zumindest einer Anwendung kann aber auch der Innenwiderstand des Mobilfunkendgeräteakkus verwendet werden. Der Innenwiderstand des Mobilfunkendgeräteakkus ist wiederum abhängig von der Temperatur, der momentan anliegenden Stromlast, dem Alter, der Chemie und der internen technischen Beschaltung des Mobilfunkendgeräteakkus.

Alternativ zur Berechnung der Spannungsschwelle durch das Betriebssystem kann es auch günstig sein, die Spannungsschwelle zum Aktivieren/Deaktivieren zumindest einer Anwendung in Form tabellarisch aufgelisteter Werte in einem Speicher des Mobilfunkendgerätes zu hinterlegen. Beispielsweise können in Form einer Look-Up-Tabelle, die Kennlinie oder Werte der Kennlinien verschiedener Mobilfunkendgeräteakkus in Abhängigkeit von den verschieden Einflussgrößen abgespeichert sein. Im Vergleich zur Berechnung der Spannungsschwelle, ist der Zugriff auf tabellarisch hinterlegte Werte, mit weniger Aufwand im Mobilfunkendgerät zu realisieren.

Für das Verfahren ist es vorteilhaft, wenn je Spannungsschwelle mindestens eine Anwendung aktiviert/deaktiviert wird. Hierdurch kann zum Beispiel in Abhängigkeit der Energiesituation des Mobilfunkendgeräteakkus zumindest eine oder mehrere Anwendungen zu-/oder abgeschaltet werden. Werden zum Beispiel pro Spannungsschwelle mehrere Anwendungen deaktiviert, so kann der Mobilfunkendgeräteakku durch das Deaktivieren mehrere Anwendungen und somit Verringern des Laststromes besser entlastet werden.

Es ist günstig, wenn eine elektrische Komponente, die von einer deaktivierten Anwendung verwendet wurde, dann abgeschaltet wird, wenn keine weitere Anwendung auf diese elektrische Komponente zugreift. Hierdurch wird sicher gestellt, dass nicht benötigte elektrische Komponenten tatsächlich vom Mobilfunkendgeräteakku getrennt werden. Jedoch können diese elektrischen Komponenten bei Bedarf, zum Beispiel bei Aktivierung einer Anwendung, wieder aktiviert werden.

Es ist vorteilhaft, wenn durch das Betriebssystem geprüft wird, ob der Zustand des Mobilfunkendgeräteakkus ausreicht, das aktuell ausgewählte Anwenderprofil auszuführen und bei unzureichender Mobilfunkendgeräteakkukapazität das Betriebssystem ein neues Anwenderprofil aktiviert. Hierdurch wird sicher gestellt, dass alle Anwendungen, die in dem letztlich ausgeführten Anwenderprofil enthalten sind, auch tatsächlich ausgeführt werden können.

Für das Verfahren ist es günstig, wenn in Abhängigkeit des aktuellen Stromverbrauchs und des Energiezustandes des Mobilfunkendgeräteakkus die Zeit bis zum Erreichen der nächsten Spannungsschwelle zum Aktivieren/Deaktivieren zumindest einer Anwendung oder bis zum Deaktivieren sämtlicher Anwendungen und damit bis zum Abschalten sämtlicher elektrischen Komponenten berechnet wird. Der Mobilfunkendgerätenutzer kann bei Kenntnis der Zeit bis zum Erreichen der nächsten Spannungsschwelle zum Aktivieren/Deaktivieren zumindest einer Anwendung oder bis zum Deaktivieren sämtlicher Anwendungen aktiv, zum Beispiel durch Deaktivieren/Aktivieren einer oder mehrerer Anwendungen, Einfluss auf diese Spannungsschwelle nehmen.

In bekannten Mobilfunkendgeräten kann bisher nur über die Batterieanzeige, die in der Regel mit einem mehr oder weniger vollen Batteriesymbol im Display dargestellt ist, grob abgeschätzt werden, wie lange das Mobilfunkendgerät noch eingeschaltet bleibt. Wird der im Mobilfunkendgerät eingestellte Schwellwert der Batteriespannung erreicht, wird in nur sehr kurzer und unbestimmter Zeit vor dem Schalten in den Auszustand der Benutzer darauf hingewiesen. Dieser Vorgang ist durch den Benutzer nicht beeinflussbar.

Durch die Berechnung eines Zu-/Abschaltzeitpunkts und somit der Zeitspanne bis zum Zu-/Abschalten einer oder mehrerer Anwendungen kann ein Mobilfunkendgerät vom Bereitschaftszustand in den Auszustand kontrolliert, selbsttätig und gesteuert geschaltet werden. Das Auslösen dieses Vorgangs ist unter anderem abhängig von der Alterung des Energiespeichers, der Umgebungstemperatur des Mobilfunkendgerätes, dem Energiebedarf des Mobilfunkendgerätes und der chemischen Zusammensetzung des Energiespeichers. Das Zu-/Abschalten wird abhängig von diesen Einflussgrößen bestimmt. Damit können Datenverlust und Fehlfunktion durch unkontrolliertes Schalten des Gerätes in den Auszustand vermieden werden. Außerdem kann durch das Abschalten einer oder mehrerer Anwendungen der Abschaltzeitpunkt für das gesamte Mobilfunkendgerät hinausgezögert werden, da das schrittweise Abschalten einer oder mehrerer Anwendungen den Mobilfunkendgeräteakku schrittweise entlastet. Das Abschalten wird somit beeinflussbar.

Vorteilhaft ist es, wenn die Abschaltzeit am Mobilfunkendgerät akustisch und/oder optisch und/oder haptisch angezeigt wird. Wobei vorzugsweise das Display die optischen Signale, der Lautsprecher die akustischen Signale und der Vibrator die haptischen Signale wieder gibt. So kann zum Beispiel durch ein Countdown-artiges Rückwärtszählen, das sowohl optisch als auch akustisch angezeigt wird, der Mobilfunkendgerätenutzer genauer auf den Zeitpunkt des Abschaltens des Mobilfunkendgerätes aufmerksam gemacht werden. Aber auch durch den Vibrator des Mobilfunkendgerätes kann die Abschaltzeit signalisiert werden, indem verschiedenen Zeiteinheiten wie Stunden, Minuten und Sekunden ver schiedene Vibratorsignale zugeordnet werden. Es besteht für den Bediener nun die Möglichkeit, zum Beispiel durch Wahl eines andern Anwenderprofils, welches weniger Anwendungen und somit weniger elektrische Komponenten verwendet, die Abschaltzeit zu verlängern.

Beispielweise könnte ein Anwenderprofil "Flugzeug" lediglich die Versorgung der Anwendung Organizer höchste Priorität vorsehen und beispielsweise die Anwendung Bluetooth mit niedrigerer Priorität bereitstellen. Alle anderen Anwendungen, wie Kamera und Sprachübertragung, die in Flugzeugen unerwünscht sind, sind deaktiviert.

Ergänzend dazu, kann am Mobilfunkendgerät akustisch und/oder optisch und/oder haptisch einmalig, dauerhaft oder mehrfach einmalig, zum Beispiel durch ein wiederholendes Signal, angezeigt werden, welche Anwendung/Anwendungen deaktiviert wurde/wurden. Hierbei besteht für den Mobilfunkendgerätenutzer die Möglichkeit, eine gerade abgeschaltete Anwendung wieder zu aktivieren und dafür eine andere zu deaktivieren.

Außerdem kann am Mobilfunkendgerät akustisch und/oder optisch und/oder haptisch einmalig oder dauerhaft angezeigt werden, dass eine Anwendung abgeschaltet wurde. Beispielsweise kann durch den Vibrator hierdurch signalisiert werden, dass eine Anwendung deaktiviert wurde.

Im Folgenden wird die Erfindung anhand bevorzugter Ausführungsbeispiele mit Hilfe der Figuren 1 bis 8 näher beschrieben.

Die Figuren zeigen im Einzelnen:
- Figuren 1 und 2:: Prinzipskizzen von Betriebsarten eines Mobilfunkendgerätes und dessen elektri schen Komponenten und Schaltmöglichkeiten zwischen diesen Betriebsarten;
- Figuren 3 bis 6:: Entladekurven eines Mobilfunkendgeräteakkus in Abhängigkeit verschiedener Parameter;
- Figur 7:: Schematische Darstellung, die verdeutlicht, wie Anwendungen eines Mobilfunkendgerätes zusammengefasst werden können, und dadurch das neue Verfahren günstig durchgeführt werden kann;
- Figur 8:: Prinzipskizze, die den Zusammenhang zwischen dem Anwendungspool, den Anwendungen, elektrischen Komponenten und elektrischen Bauteilen verdeutlicht.

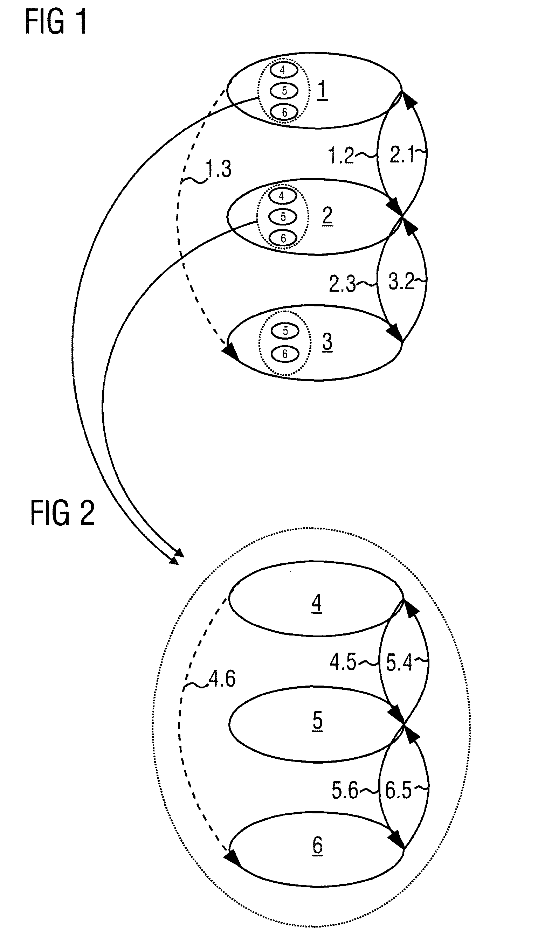

In den Figuren 1 und 2 werden jeweils Prinzipskizzen von Betriebsarten eines Mobilfunkendgerätes (Figur 1), Betriebsarten der elektrischen Komponenten (Figur 2) und Schaltmöglichkeiten zwischen diesen Betriebsarten dargestellt.

Hierbei werden die Betriebsarten des Mobilfunkendgerätes und der elektrischen Komponenten durch Ellipsen mit durchgezogener Umrandung symbolisiert.

In der Figur 1 sind die folgenden drei möglichen Betriebsarten eines Mobilfunkendgerätes aufgeführt:
- Im Betriebszustand 1 des Mobilfunkendgerätes, kann eine oder mehrere Anwendungen eines Nutzerprofils aktiviert sein. Dabei sind die benötigten elektrischen Komponenten dieser aktiven Anwendung/en aktiviert und nach Figur 2 im Zustand 4, 5 oder 6.
- Im Bereitschaftszustand 2 des Mobilfunkendgerätes, ist sowohl die Aktivierung einer Anwendung eines beliebigen Nutzerprofils (Betriebszustand 1) als auch der Übergang in den Auszustand 3 des Mobilfunkendgerätes möglich. Auch im Bereitschaftszustand 2 des Mobilfunkendgerätes können die elektrischen Komponenten im Zustand 4, 5 oder 6 sein.
- Im Auszustand 3 des Mobilfunkendgerätes, ist nur die Aktivierung in den Bereitschaftszustand 2 möglich. Im Auszustand 3 sind die Anwendungen und deren zugehörige elektrische Komponenten aller Nutzerprofile deaktiviert, das heißt nach Figur 2 im Zustand 6.

In der linken Figurenhälfte ist die nicht kontrollierbare Schaltmöglichkeit 1.3 vom Betriebszustand 1 in den Auszustand 3 des Mobilfunkendgerätes dargestellt. Dieses Schalten tritt bei heutigen Mobilfunkendgeräten auf, wenn die Akkuleistung des Mobilfunkendgerätes nachlässt und die Leistung nicht mehr ausreicht, sämtliche Anwendungen im Mobilfunkendgerät auszuführen. Das Mobilfunkendgerät wird technisch bedingt abgeschaltet. Ein automatisches wieder Einschalten des Mobilfunkendgerätes ist trotz vorhandener Restkapazität des Mobilfunkendgeräteakkus bei bisherigen Mobilfunkendgeräten nicht vorgesehen.

Dieses unkontrollierte Abschalten 1.3 des Mobilfunkendgerätes soll durch das neue Verfahren verhindert werden. Außerdem sollen durch das kontrollierte Deaktivieren von Anwendungen, die Standby-Zeit des Mobilfunkendgerätes verlängert werden. Außerdem wird der Zeitpunkt, zu dem das Mobilfunkendgerät komplett abgeschaltet wird, hinausgezögert.

Im neuen Verfahren sind folgende kontrollierbaren Schaltmöglichkeiten zwischen den Betriebsarten des Mobilfunkendgerätes realisierbar:
- Kontrolliertes Schalten 1.2 vom Betriebszustand 1 in den Bereitschaftszustand 2 des Mobilfunkendgerätes.
- Kontrolliertes Schalten 2.1 vom Bereitschaftszustand 2 in den Betriebszustand 1 des Mobilfunkendgerätes.
- Kontrolliertes Schalten 2.3 vom Bereitschaftszustand 2 in den Auszustand 3 des Mobilfunkendgerätes.
- Kontrolliertes Schalten 3.2 vom Auszustand 3 in den Bereitschaftszustand 2 des Mobilfunkendgerätes.

In Figur 2 werden die verschiedenen Betriebsarten der elektrischen Komponenten des Mobilfunkendgerätes dargestellt. Das Schalten zwischen den Betriebsarten der elektrischen Komponenten erfolgt analog zum Schalten der Betriebsarten des Mobilfunkendgerätes.

Die Betriebsarten und die Schaltmöglichkeiten der elektrischen Komponenten sind im folgenden aufgelistet:
- Im Betriebszustand 4 der elektrischen Komponenten des Mobilfunkendgerätes sind die einzelnen elektrischen Komponenten aktiviert.
- Im Bereitschaftszustand 5 der elektrischen Komponenten des Mobilfunkendgerätes, kann sowohl die Aktivierung der einzelnen elektrischen Komponente in den Betriebszustand 4 als auch der Übergang in den Auszustand 6 ermöglicht werden.
- Im Auszustand 6 der elektrischen Komponenten ist eine Aktivierung der einzelnen elektrischen Komponenten in den Bereitschaftszustand 5 möglich.

In der linken Figurenhälfte ist, durch den einen gebogenen und gestrichelten Pfeil, die nicht kontrollierbare Schaltmöglichkeit 4.6 vom Betriebszustand 4 in den Auszustand 6 der elektrischen Komponenten dargestellt. Dieses Schalten tritt bei heutigen Mobilfunkendgeräten auf, wenn die Akku leistung des Mobilfunkendgerätes nachlässt und die Leistung nicht mehr ausreicht, die elektrischen Komponenten zu versorgen, auf die besondere Anwendungen zurückgreifen. Die elektrische Komponente wird automatisch und technisch bedingt abgeschaltet. Auch dieses unkontrollierbare Schalten 4.6 der elektrischen Komponenten soll durch dieses Verfahren verhindert werden.

Im neuen Verfahren wird dieses unkontrollierte Schalten 4.6 dadurch vermieden beziehungsweise kontrolliert hinausgezögert, dass zwischen den Zuständen 4, 5 und 6 gezielt hin und her geschaltet wird. Es sind folgende kontrollierbaren Schaltmöglichkeiten zwischen den Betriebsarten des Mobilfunkendgerätes realisierbar:
- Kontrolliertes Schalten 4.5 vom Betriebszustand 4 in den Bereitschaftszustand 5 der elektrischen Komponenten des Mobilfunkendgerätes.
- Kontrolliertes Schalten 5.4 vom Bereitschaftszustand 5 in den Betriebszustand 4 der elektrischen Komponenten des Mobilfunkendgerätes.
- Kontrolliertes Schalten 5.6 vom Bereitschaftszustand 5 in den Auszustand 6 der elektrischen Komponenten des Mobilfunkendgerätes.
- Kontrolliertes Schalten 6.5 vom Auszustand 6 in den Bereitschaftszustand 5 der elektrischen Komponenten des Mobilfunkendgerätes.

In der nachfolgenden Tabelle 1 werden exemplarisch Werte und Texte beziehungsweise Textmeldungen aufgelistet, die verdeutlichen, welche elektrischen Komponenten im neuen Verfahren abhängig von verschiedenen Parametern abgeschaltet werden können. Die Tabelle 1 enthält im einzelnen: In der ersten Spalte wird die Batteriespannung des Mobilfunk endgerätes von 4.0 Volt abfallend bis zur Abschaltspannung von 3.2 Volt aufgelistet. In der zweiten Spalte wird die zu einer bestimmten Batteriespannung notwendige Umgebungstemperatur aufgelistet, ab der bestimmte Verbraucher (Spalte 3) im Mobilfunkendgerät abgeschaltet werden. In der vierten Spalte wird der maximal mögliche Strom in Milliampere aufgelistet, der für die noch nicht abgeschalteten elektrischen Komponenten verbraucht wird. In der letzten Spalte werden die Warnmeldungen, die im Display des Mobilfunkendgerätes angezeigt werden, aufgelistet.

Bei bisher bekannten Mobilfunkendgeräten wurde lediglich bei einer bestimmten Abschaltspannung, in diesem Beispiel 3.2 Volt, das gesamte Mobilfunkendgerät abgeschaltet, dies ist der letzten Zeile in der Tabelle 1 entnehmbar. Die in den Zeilen 4 bis 10 der Tabelle 1 angegebenen Abschaltzenarien und die Ausgabe von Warnmeldungen am Display wurden bisher in Mobilfunkendgeräten nicht realisiert.

**Tabelle 1:**

| **Batterie spannung** | **Umgebungstemperatur** | **Abschaltung folgender Verbraucher** | **max. möglicher Stromverbrauch** | **Warnmeldung im Display in Form von Text, Symbolen. Ebenfalls Signale möglich** |
|---|---|---|---|---|
| 4,0V | 25°C | Keine | 1791 mA | keine |
| 3,5V | 25°C | Keine | 1791 mA | keine |
| 3,5V | 10°C | Kamera | 1691 mA | Kamera aus, Batterie laden! Abschalten in ...Min. |
| 3,4V | 10°C | Kamera, WLAN | 1591 mA | Kamera und WLAN aus, Batterie laden! Abschalten in ...Min. |
| 3,3V | 10°C | Kamera, WLAN | 1591 mA | Kamera und WLAN aus, Batterie laden! Abschalten in ...Min. |
| 3,3V | 0°C | Kamera, WLAN, MMC, Reduzierung der max. Ausgangsleistung von 24dBm auf 21dBm | 1341 mA | Daten Transfer aus, Batterie laden! Abschalten in ...Min. |
| 3,3V | -10°C | Kamera, WLAN, MMC, Reduzierung der max. Ausgangsleistung von 24dBm auf 21dBm, Bluetooth | 1246 mA | Daten Transfer und Bluetooth aus, Batterie laden! Abschalten in ...Min. |
| 3,2V | 0°C | Kamera, WLAN, MMC, Reduzierung der max. Ausgangsleistung von 24dBm auf 21dBm, Bluetooth | 1246 mA | Daten Transfer und Bluetooth aus, Batterie laden! Abschalten in ...Min. |
| 3,2V | -10°C | Kamera, WLAN, MMC, Reduzierung der max. Ausgangsleistung von 24dBm auf 21dBm, Bluetooth, Vibra, Dimmen der Tastatur- und Displaybeleuchtung | 1116 mA | Daten Transfer, Bluetooth und Vibrator aus, Batterie laden! Abschalten in ...Min. |
| 3,1V | Jede Temperatur | Gesamtgerät | 0 mA | Daten Transfer, Bluetooth und Vibrator aus, Batterie laden! Abschalten in 1 Min. |

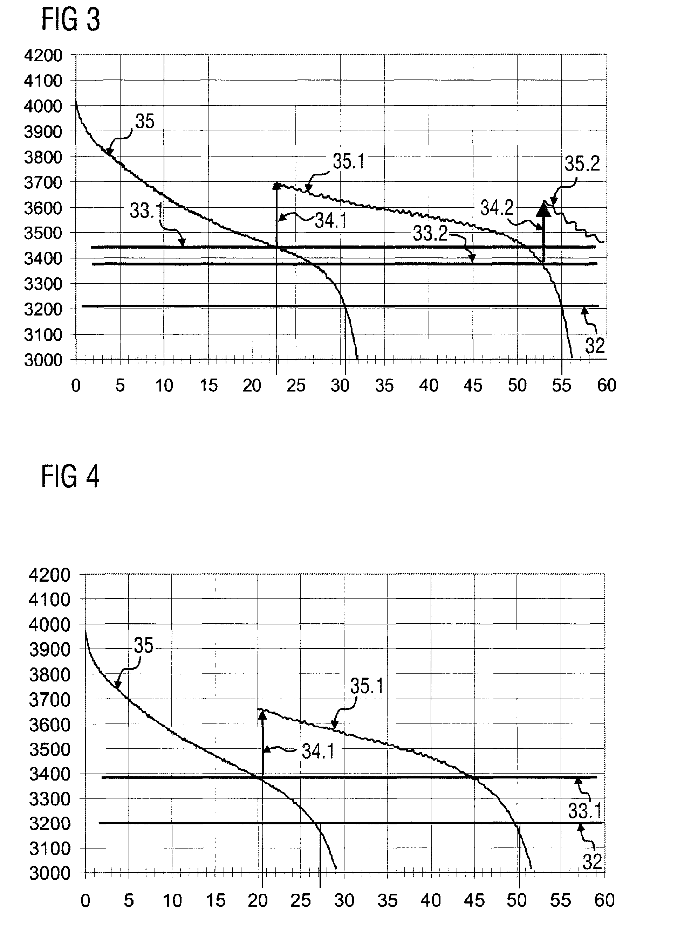

Die Diagramme in den Figuren 3 bis 6 zeigen jeweils beispielhaft verschiedene errechnete Entladekurven eines Mobilfunkendgeräteakkus, welcher in einem möglichen, zukünftigen UMTS Mobilfunkendgerät eingesetzt werden kann, in Abhängigkeit der Umgebungstemperatur, des Alterszustandes des Akkus und bei unterschiedlichen Entladeströmen. Auf den Ordinaten werden jeweils die Spannungen des Mobilfunkendgeräteakkus in Millivolt, und auf den Abszissen werden jeweils Zeiten in willkürlichen Einheiten aufgetragen.

Das Diagramm der Figur 3 zeigt drei Entladekurven eines neuen Mobilfunkendgeräteakkus bei einer Umgebungstemperatur von 25 Grad Celsius. Die Entladekurve 35 im linken Teil des Diagramms ergibt sich, wenn folgende elektrischen Komponenten den Mobilfunkendgeräteakku entladen:

Licht (vollständig eingeschaltet), Verstärkerausgangsleistung bei 24 dBm, Vibrator, Polyphoner Sound, WLan, Irda, Bluetooth, Kamera und MMC. Insgesamt herrscht bei diesen elektrischen Komponenten ein Entladestrom von 1900 Milliampère.

Die Spannung fällt innerhalb von circa 32 Zeiteinheiten von 4.0 Volt auf 3.0 Volt ab. Um ein vollständiges Entladen des Mobilfunkendgeräteakkus zu vermeiden, werden bei bisherigen Mobilfunkendgeräten bei Erreichen einer bestimmten Spannung alle Anwendungen und die verwendeten elektrischen Komponenten abgeschaltet.

Im Diagramm der Figur 3 liegt dieser Abschaltspannungsschwellwert 32 bei circa 3.2 Volt. Nach circa 30,5 Zeiteinheiten würden alle elektrischen Komponenten abgeschaltet.

Durch das neue Verfahren ist es nun möglich, dieses Abschalten aller Anwendungen zeitlich hinauszuzögern.

Hierzu wird ein erster Spannungsschwellwert 33.1 gesetzt. Dieser erste Spannungsschwellwert 33.1 wird individuell, das heißt abhängig von zum Beispiel den aktiv ausgeführten Anwendungen und dem aktuellen Zustand des Mobilfunkendgeräteakkus, bestimmt.

Der erste Spannungsschwellwert 33.1 liegt zwischen 3.4 und 3.5 Volt. Bei dieser Spannung ist die Gesamtenergie des Mobilfunkendgeräteakkus zu 75 Prozent verbraucht. Bei dem Mobilfunkendgeräteakku ist dieser erste Spannungsschwellwert 33.1 nach circa 22,5 Zeiteinheiten erreicht. Bei diesem ersten Spannungsschwellwert 33.1 wird ein erster Abschaltvorgang 34.1 durchgeführt. So wird die Verstärkerausgangsleistung von 24 dBm auf 21 dBm reduziert und das Licht abgeschaltet. Hierdurch sinkt die Stromaufnahme von 1900 Milliampère auf 1100 Milliampere und die Mobilfunkendgeräteakkuspannung steigt durch diese Entlastung wieder auf knapp 3.7 Volt an. Es ergibt sich die mittlere Entladekurve 35.1 nach dem ersten Abschaltvorgang. Durch das Deaktivieren einer oder mehrerer Anwendungen kann der Zeitpunkt bis zum Erreichen des Abschaltspannungsschwellwertes 32, zeitlich auf 55 Zeiteinheiten hinausgezögert werden.

Das neue Verfahren ermöglicht auch weitere solche individuell bestimmten Spannungsschwellwerte zu setzten und mehrere Abschaltvorgänge durchzuführen. So können bei Erreichen eines zweiten Spannungsschwellwertes 33.2 erneut durch einen zweiten Abschaltvorgang 34.2 weitere Anwendungen deaktiviert werden. Die Deaktivierung einer Anwendung bedeutet, dass die elektrische Komponente/n, die diese Anwendung verwendet, zum Beispiel in einen Bereitschaftszustand beziehungsweise Standbyzustand oder abgeschaltet werden.

Der zweite Spannungsschwellwert 33.2 liegt bei einer niedrigeren Spannung als der erste Spannungsschwellwert 33.1, da eine geringere Spannung für die Aktivierung von wenigeren Komponenten vorgehalten werden muss.

Wird bei der Entladekurve 35.1 durch den zweiten Abschaltvorgang 34.2 eine Anwendung abgeschaltet, ergibt sich die Entladekurve 35.2.

An dieser Stelle sei erwähnt, dass durch das neue Verfahren nicht nur Anwendungen bei einer bestimmten Spannungsschwelle deaktiviert werden können. Es ist auch möglich Anwendungen zu aktivieren oder wieder zu aktivieren. So ist es denkbar, dass eine oder mehrere Anwendungen aufgrund unzureichender Mobilfunkendgeräteleistung, zum Beispiel bei einem Wechsel des Mobilfunkendgerätes von einer Umgebung mit hoher Temperatur in eine Umgebung mit tiefer Temperatur, deaktiviert wurden. Wird das Mobilfunkendgerät wieder in eine Umgebung mit hoher Temperatur gebracht, wodurch die Mobilfunkendgeräteleistung wieder zunimmt, werden auch die zuvor deaktivierten Anwendungen wieder aktiviert.

In den Diagrammen der Figuren 4 bis 6 sind beispielhaft aufgenommene Entladekurven für unterschiedliche Temperaturen und Entladeströme eines gealterten Mobilfunkendgeräteakkus dargestellt. Der Mobilfunkendgeräteakku wurde circa 500 mal geladen und wieder entladen.

Das Diagramm der Figur 4 zeigt im linken Teil die Entladungskurve 35 eines gealterten Mobilfunkendgeräteakkus bei 25 Grad Celsius Umgebungstemperatur. Analog zum Diagramm aus Figur 3 wurden die selben elektrischen Komponenten an den Mobilfunkendgeräteakku angelegt, wodurch sich ein Entladestrom von 1900 Milliampere ergibt. Nach 29 Zeiteinheiten wäre der Mobilfunkendgeräteakku auf 3.0 Volt entladen. Bei einem gealterten Mobilfunkendgeräteakku sollte die erste Spannungsschwelle 33.1, bei der ein erster Abschaltvorgang 34.1 durchgeführt wird, an den geänderten Spannungsverlauf angepasst werden. Erst beim Absinken der Mobilfunkendgerätespannung auf knapp 3.4 Volt wird der erste Abschaltvorgang durchgeführt. Im Vergleich dazu war der erste Spannungsschwellwert 33.1 in Figur 3 zwischen 3.4 und 3.5 Volt. Es ergibt sich die Entladekurve 35.1. Auch bei älteren Mobilfunkendgeräteakkus kann durch dieses Verfahren die Ausnutzung der Kapazität des Mobilfunkendgeräteakkus optimiert werden.

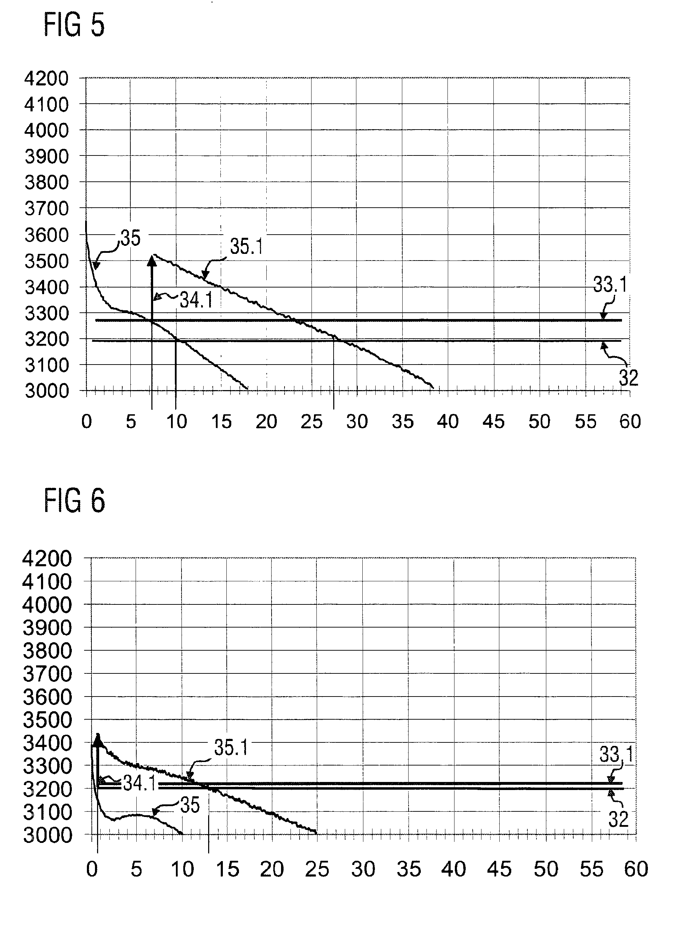

Die Diagramme in den Figuren 5 und 6 zeigen analog dem Diagramm der Figur 4 die beiden Entladekurven eines Mobilfunkendgeräteakkus, der 500 Lade- und Entladezyklen durchlaufen hat. Im Unterschied zu Figur 4 ist die Umgebungstemperatur in Figur 5 bei 0 Grad Celsius und in Figur 6 bei minus 10 Grad Celsius. Es ist zu beobachten, dass sich die Entladezeiten bei tieferen Temperaturen deutlich verkürzen. Aber auch bei tiefen Umgebungstemperaturen, unterhalb der Zimmertemperatur, kann durch dieses Verfahren die Verfügbarkeit des Mobilfunkendgeräteakkus optimiert beziehungsweise ermöglicht werden.

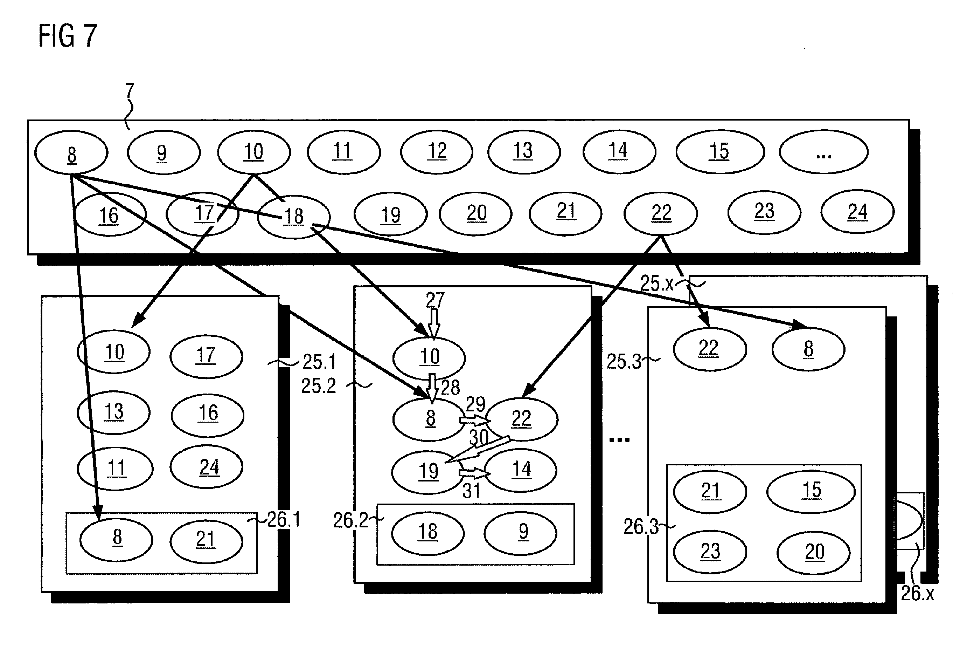

Die Figur 7 zeigt in der schematischen Darstellung ein Beispiel, das verdeutlicht, wie Anwendungen eines Mobilfunkendgerätes in Anwenderprofilen, hier mit Nutzerprofil 25.1 bis 25.x bezeichnet, zusammengefasst werden können, und dadurch das neue Verfahren günstig durchgeführt werden kann. Alle Anwendungen, die das Mobilfunkendgerät ausführen kann, sind in einem Anwendungspool 7 enthalten. In der in Figur 7 gezeigten schematischen Darstellung sind im Anwendungspool 7 folgende Anwendungen vorhanden: Voice 8, USB 9, WAP 10, SMS 11, EMS 12, MMS 13, Email 14, Organizer 15, Kamera 16, IrDA 17, GPRS 18, ATC 19, Spiele 20, Sound 21, Bluetooth 22, Java 23 und Adressbuch 24. Je nach Ausstattung und Konfigurierung des Mobilfunkendgerätes kann die Anzahl der Anwendungen variieren. Würden alle Anwendungen des Mobilfunkendgerätes ausgeführt werden und somit die elektrischen Komponenten, die durch diese Anwendungen verwendet werden, so wäre der Mobilfunkendgeräteakku nach relativ kurzer Zeit entladen.

Das neue Verfahren zum Betrieb eines Mobilfunkendgerätes bietet nun die Möglichkeit, einzelne Anwendungen zu deaktivieren und somit die von diesen Anwendungen benötigten elektrischen Komponenten zu deaktivieren. Auch hier sei erwähnt, dass das Verfahren auch eine Aktivierung der Anwendungen und elektrischen Komponenten ermöglicht. Aber nur durch eine Deaktivierung von Anwendungen und elektrischen Komponenten kann die Verfügbarkeit des Mobilfunkendgeräteakkus verlängert werden, da durch die Deaktivierung der Stromverbrauch des Mobilfunkendgerätes verringert wird.

Zumindest ein Teil der Anwendungen 8 bis 24 des Anwendungspools 7 kann in Nutzerprofilen 25.1 bis 25.x zusammengefasst werden oder konfigurationsbedingt bereits zusammengefasst sein. Dies ist durch die Pfeile von Anwendungen des Anwendungspools 7 zu Anwendungen in den Nutzerprofilen 25.1 bis 25.x angedeutet. So kann ein Nutzerprofil 25.1 bis 25.x im Mobilfunkendgerät bereits vordefiniert vorliegen oder es kann durch den Bediener die Anzahl und die Auswahl der Anwendungen frei wählbar sein. In den Nutzerprofilen 25.1 bis 25.x können wiederum Basisprofile 26.1 bis 26.x vordefiniert sein oder vordefiniert werden.

Im Nutzerprofil 25.2 sind beispielsweise folgende Anwendungen des Anwendungspools 7 eingefügt: WAP 10, Voice 8, Bluetooth 22, ATC 19, Email 14, GPRS 18, und USB 9. Wird nun beispielsweise das Nutzerprofil 25.2 aktiviert, sind nur diejenigen Anwendungen, die im Nutzerprofil 25.2 enthalten sind, eingeschaltet oder im Standby- beziehungsweise im Bereitschaftszustand. Somit sind auch nur diejenigen elektrischen Komponenten eingeschaltet, die zur Ausführung der Anwendungen im Nutzerprofil 25.2 notwendig sind. Es wird also bereits durch Auswählen des Nutzerprofils 25.2 der Energieverbrauch gesenkt. Auch das, dem neuen Verfahren zugrunde liegende Aktivieren/Deaktivieren von Anwendungen kann anhand des Schemas der Figur 7 erläutert werden.

Es kann der Stromverbrauch reduziert werden, indem ab einem bestimmten Energiezustand des Mobilfunkendgeräteakkus schrittweise eine oder mehrerer Anwendungen und somit deren nicht mehr benötigten elektrischen Komponenten abgeschaltet werden. So wird als erstes die Anwendung WAP 10 abgeschaltet 27. Dann folgt durch die Pfeile 28 bis 31 symbolisiert das Abschalten der Anwendung Voice 8, Bluetooth 22, ATC 19 und Email 14. Auch die Abschaltreihenfolge durch den Mobilfunkendgerätenutzer ist frei wählbar. Die Anwendungen GPRS 18 und USB 9, die im Basisprofil 26.2 vorhanden sind, werden erst bei Erreichen des Spannungswertes der Abschaltschwelle beide gleichzeitig abgeschaltet.

Diese beiden Anwendungen GPRS 18 und USB 9 haben also höchste Priorität. Sie werden im Mobilfunkendgerät am längsten ausgeführt.

Durch das schrittweise Abschalten der Anwendungen WAP 10, Voice 8, Bluetooth 22, ATC 19 und Email 14 kann die Restkapazität des Mobilfunkendgeräteakkus für die Anwendungen GPRS 18 und USB 9 des Basisprofils 26.2 längere Zeit zu Verfügung stehen.

Würde beispielsweise der Mobilfunkendgeräteakku nach dem Abschalten 31 der Anwendung Email 14 aufgeladen werden, so würde durch das neue Verfahren, schrittweise in Abhängigkeit der Zunahme des Ladezustandes des Mobilfunkendgeräteakkus, die Anwendungen Email 14, ATC 19, Bluetooth 22, Voice 8 und WAP 10 wieder aktiviert werden.

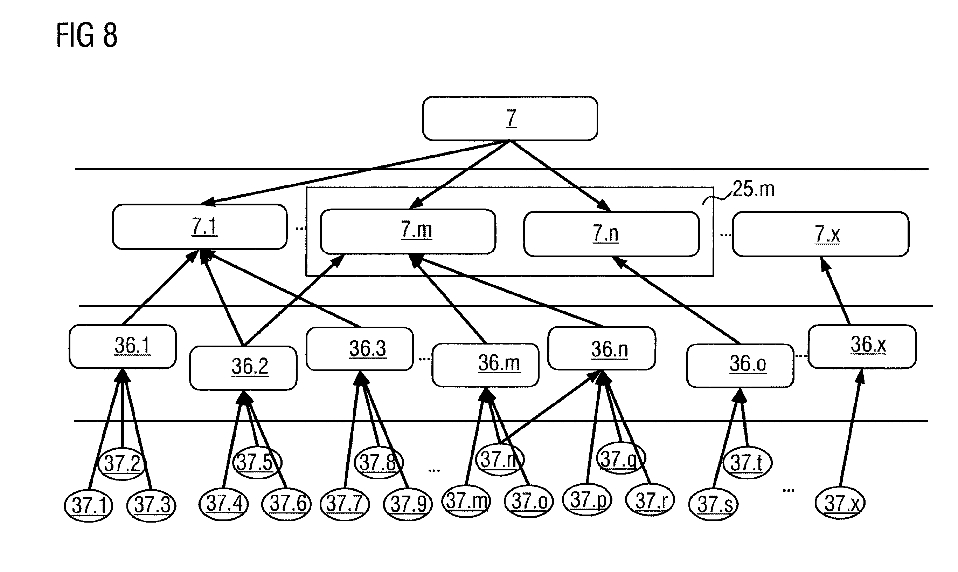

Die Prinzipskizze der Figur 8 soll den Zusammenhang zwischen dem Anwendungspool 7, den Anwendungen 7.1 bis 7.x und den elektrischen Komponenten 36.1 bis 36.x und elektrischen Bauteile 37.1 bis 37.x verdeutlichen. Ein Mobilfunkendgerät kann innerhalb eines Anwendungspools 7 auf verschiedene Anwendungen 7.1 bis 7.n, 7.n+1 bis 7.x zugreifen beziehungsweise zurückgreifen. Eine Anwendung oder mehrere Anwendun gen können dabei zu Nutzerprofilen 25.1 bis 25.m bis 25.x zusammengefasst sein. Beispielesweise enthält das Nutzerprofil 25.m in Figur 8 die Anwendungen 7.m und 7.n.

Damit die Anwendungen 7.1 bis 7.m, 7.n bis 7.x physisch ausgeführt werden können, müssen diese auf elektrische Komponenten 36.1 bis 36.x zugreifen können, dies ist durch die Pfeile symbolisiert. Die Anwendung 7.1 verwendet in diesem Beispiel die elektrischen Komponenten 36.1 bis 36.3. Die elektrischen Komponenten 36.1 bis 36.3 wiederum benötigen zur Funktion die elektrischen Bauteile 37.1 bis 37.9.

Im Vergleich dazu verwendet die Anwendung 7.x nur eine elektrische Komponente 36.x, die wiederum zur Funktion ein elektrisches Bauteil 37.x benötigt.

Werden nun im neuen Verfahren die Anwendungen 7.1 und 7.x deaktiviert, so werden die elektrischen Komponenten 36.1, 36.3 und 36.x auch deaktiviert. Die zugehörigen elektrischen Bauteile 37.1 bis 37.3 und 37.7 bis 37.9 und 37.x werden ebenfalls deaktiviert.

Im Beispiel der Figur 8 wird die elektrische Komponente 36.2 und somit die davon verwendeten elektrischen Bauteile 37.4 bis 37.6 zusätzlich von der Anwendung 7.m benötigt. Deshalb werden diese elektrische Komponente 36.2 und somit die davon verwendeten elektrischen Bauteile 37.4 bis 37.6 beim Deaktivieren der Anwendung 7.1 nicht deaktiviert.

Die elektrischen Komponenten 36.1 bis 36.x im Mobilfunkendgerät können beispielsweise das Mikrofon, der Controller, der Verstärker, ein DSP oder ein Soundchip sein.

Die elektrischen Komponenten 36.1 bis 36.x bedienen sich wiederum verschiedener elektrischer Bauteile 37.1 bis 37.x. Unter elektrischem Bauteil 37.1 bis 37.x ist dann bei spielsweise ein MOSFET, ein Spannungsregler oder ein ähnliches Bauteil zu verstehen.

Insgesamt wird also durch die Erfindung, ein Verfahren zum Betrieb eines Mobilfunkendgerätes mit einem Betriebssystem vorgestellt, bei dem die Kapazität des bestehenden Mobilfunkendgeräteakkus besser ausgenutzt wird. Hierdurch können einzelne Anwendungen länger ausgeführt werden. Welche Anwendungen bis zum endgültigen Abschalten des Mobilfunkendgerätes aktiviert bleiben kann entweder durch den Mobilfunkendgerätenutzer frei gewählt werden oder es kann durch eine Konfigurierung des Mobilfunkendgerätes vorgegeben sein.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

Im Anmeldetext, der Figurenbeschreibung und den Patentansprüchen wurden folgende Abkürzungen verwendet:
- ATC: AT-Cellular command set
- dBm: Dezibel, bezogen auf ein Milliwatt Ausgangsleistung
- DSP: Digital Signal Processor = Digitaler Signal Prozessor
- EMS: Enhanced Message Service
- GPRS: General Packet Radio Service
- GSM: Global System for Mobile Communications
- IRDA: Infrared Data Association
- MMC: Multimedia Card = Speicherkarte
- MMS: Multi Media Service
- MOSFET: Metal-Oxid-Semiconductor-Feldeffekttransistor
- SMS: Short Message Service
- UMTS: Universal Mobile Telecommunications System

- USB: Universal Serial Bus
- WAP: Wireless Application Protocol = Internetanwendung auf dem Handy
- WCDMA: Wideband Code Division Multiple Access
- WLAN: Wireless Local Area Network = Funk-LAN

Außerdem wurden in der Figurenbeschreibung und den Figuren folgende Bezugszeichen gesetzt:
- 1: Betriebszustand des Mobilfunkendgerätes
- 1.2: Kontrolliertes Schalten vom Betriebszustand in den Bereitschaftszustand des Mobilfunkendgerätes
- 1.3: Nicht beeinflussbares Schalten vom Betriebszustand in den Auszustand des Mobilfunkendgerätes
- 2: Bereitschaftszustand des Mobilfunkendgerätes
- 2.1: Kontrolliertes Schalten vom Bereitschaftszustand in den Betriebszustand des Mobilfunkendgerätes
- 2.3: Kontrolliertes Schalten vom Bereitschaftszustand in den Auszustand des Mobilfunkendgerätes
- 3: Auszustand des Mobilfunkendgerätes
- 3.2: Kontrolliertes Schalten vom Auszustand in den Bereitschaftszustand des Mobilfunkendgerätes
- 4: Betriebszustand der elektrischen Komponenten
- 4.5: Kontrolliertes Schalten vom Betriebszustand in den Bereitschaftszustand der elektrischen Komponenten

- 4.6: Nicht beeinflussbares Schalten vom Betriebszustand in den Auszustand der elektrischen Komponenten
- 5: Bereitschaftszustand der elektrischen Komponenten
- 5.4: Kontrolliertes Schalten vom Bereitschaftszustand in den Betriebszustand der elektrischen Komponenten
- 5.6: Kontrolliertes Schalten vom Bereitschaftszustand in den Auszustand der elektrischen Komponenten
- 6: Auszustand der elektrischen Komponenten
- 6.5: Kontrolliertes Schalten vom Auszustand in den Bereitschaftszustand der elektrischen Komponenten
- 7: Anwendungspool
- 7.1 - 7.m, 7.n - 7.x: Anwendung 1 bis Anwendung m, Anwendung n bis Anwendung x (allgemein)

Spezielle Anwendungen mit den Bezugszeichen 8 bis 24:
- 8: Voice
- 9: USB
- 10: WAP
- 11: SMS
- 12: EMS
- 13: MMS
- 14: Email
- 15: Organizer
- 16: Kamera
- 17: IrDa
- 18: GPRS
- 19: ATC
- 20: Spiele
- 21: Sound
- 22: Bluetooth
- 23: Java

- 24: Adressbuch
- 25.1 - 25.m - 25.x: Nutzerprofil 1 bis Nutzerprofil m bis Nutzerprofil x
- 26.1 - 26.x: Basisprofil 1 des Nutzerprofils 1 bis Basisprofil x des Nutzerprofils x
- 27: Abschalten der Anwendung WAP
- 28: Abschalten der Anwendung Voice
- 29: Abschalten der Anwendung Bluetooth
- 30: Abschalten der Anwendung ATC
- 31: Abschalten der Anwendung Email
- 32: Abschaltspannungsschwellwert
- 33.1: erster Spannungsschwellwert
- 33.2: zweiter Spannungsschwellwert
- 34.1: erster Abschaltvorgang
- 34.2: zweiter Abschaltvorgang
- 35: Entladekurve ohne abgeschaltete elektrische Komponenten
- 35.1: Entladekurve nach erstem Abschaltvorgang
- 35.2: Entladekurve nach zweitem Abschaltvorgang
- 36.1 - 36.m, 36.n, 36.o - 36.x: Elektrische Komponente 1 bis m, n ,o bis x
- 37.1 - 37.m - 37.t - 37.x: Elektrisches Bauteil 1 bis m bis t bis x

## Patentansprüche

1. Verfahren zum Betrieb eines Mobilfunkendgerätes mit einem Betriebssystem, wobei im Mobilfunkendgerät eine Mehrzahl von Anwendungen (7.1 bis 7.x und 8 bis 24) vorliegen, die in Anwenderprofilen (25.1 bis 25.x) individuell und/oder vorkonfiguriert aktiviert werden, bei dem zumindest eine Anwendung (7.1 bis 7.x und 8 bis 24), die im Mobilfunkendgerät aktiv ausgeführt wird oder in einem Bereitschaftszustand ist, zumindest eine elektrische Komponente (36.1 bis 36.x) verwendet und dadurch Energie des Mobilfunkendgeräteakkus verbraucht,
**dadurch gekennzeichnet,**
**dass** die Anwendungen (7.1 bis 7.x und 8 bis 24) in den Anwenderprofilen (25.1 bis 25.x) in einer vom Mobilfunkendgerätenutzer frei wählbaren oder einer vorgegebenen Reihenfolge vom Betriebssystem aktiviert oder deaktiviert werden, wobei zumindest eine Spannungsschwelle (33.1 und 33.2) zum Aktivieren/Deaktivieren von zumindest einer Anwendung (7.1 bis 7.x und 8 bis 24) abhängig von der Energiesituation des Mobilfunkendgeräteakkus individuell bestimmt wird.

2. Verfahren gemäß dem voranstehenden Patentanspruch 1,
**dadurch gekennzeichnet,**
**dass** die Spannungsschwelle (33.1 und 33.2) zum Aktivieren/Deaktivieren zumindest einer Anwendung (7.1 bis 7.x und 8 bis 24) abhängig vom Ladezustand und der Restkapazität des Mobilfunkendgeräteakkus vom Betriebssystem berechnet wird.

3. Verfahren gemäß einem der voranstehenden Patentansprüche 1 und 2,
**dadurch gekennzeichnet,**
**dass** die Spannungsschwelle (33.1 und 33.2) zum Aktivieren/Deaktivieren zumindest einer Anwendung (7.1 bis 7.x und 8 bis 24) abhängig von Lade-/Entladehistorie des Mobilfunkendgeräteakkus vom Betriebssystem berechnet wird.

4. Verfahren gemäß einem der voranstehenden Patentansprüche 1 bis 3,
**dadurch gekennzeichnet,**
**dass** die Spannungsschwelle (33.1 und 33.2) zum Aktivieren/Deaktivieren zumindest einer Anwendung (7.1 bis 7.x und 8 bis 24) abhängig von Umgebungsbedingungen des Mobilfunkendgeräteakkus vom Betriebssystem berechnet wird.

5. Verfahren gemäß einem der voranstehenden Patentansprüche 1 bis 4,
**dadurch gekennzeichnet, dass** die Spannungsschwelle (33.1 und 33.2) zum Aktivieren/Deaktivieren zumindest einer Anwendung (7.1 bis 7.x und 8 bis 24) abhängig von der Chemie des Mobilfunkendgeräteakkus vom Betriebssystem berechnet wird.

6. Verfahren gemäß einem der voranstehenden Patentansprüche 1 bis 5,
**dadurch gekennzeichnet,**
**dass** die Spannungsschwelle (33.1 und 33.2) zum Aktivieren/Deaktivieren zumindest einer Anwendung (7.1 bis 7.x und 8 bis 24) abhängig von der Kapazität des Mobilfunkendgeräteakkus vom Betriebssystem berechnet wird.

7. Verfahren gemäß einem der voranstehenden Patentansprüche 1 bis 6,
**dadurch gekennzeichnet,**
**dass** die Spannungsschwelle (33.1 und 33.2) zum Aktivieren/Deaktivieren zumindest einer Anwendung (7.1 bis 7.x und 8 bis 24) abhängig vom Innenwiderstand des Mobilfunkendgeräteakkus vom Betriebssystem berechnet wird.

8. Verfahren gemäß einem der voranstehenden Patentansprüche 1 bis 7,
**dadurch gekennzeichnet,**
**dass** die Spannungsschwelle (33.1 und 33.2) zum Aktivieren/Deaktivieren zumindest einer Anwendung (7.1 bis 7.x und 8 bis 24) in Form tabellarisch aufgelisteter Werte in einem Speicher des Mobilfunkendgerätes hinterlegt wird.

9. Verfahren gemäß einem der voranstehenden Patentansprüche 1 bis 8,
**dadurch gekennzeichnet,**
**dass** je Spannungsschwelle (33.1 und 33.2) mindestens eine Anwendung (7.1 bis 7.x und 8 bis 24) aktiviert/deaktiviert wird.

10. Verfahren gemäß einem der voranstehenden Patentansprüche 1 bis 9,
**dadurch gekennzeichnet,**
**dass** eine elektrische Komponente (36.1 und 36.3), die von einer deaktivierten Anwendung (7.1) verwendet wurde, dann abgeschaltet wird, wenn keine weitere Anwendung (7.2 bis 7.x) auf diese elektrische Komponente (36.1 und 36.3) zugreift.

11. Verfahren gemäß einem der voranstehenden Patentansprüche 1 bis 10,
**dadurch gekennzeichnet,**
**dass** durch das Betriebssystem geprüft wird, ob der Zustand des Mobilfunkendgeräteakkus ausreicht, das aktuelle Anwenderprofil auszuführen und bei unzureichender Mobilfunkendgeräteakkukapazität das Betriebssystem ein neues Anwenderprofil aktiviert.

12. Verfahren gemäß einem der voranstehenden Patentansprüche 1 bis 11,
**dadurch gekennzeichnet,**
**dass** in Abhängigkeit des aktuellen Stromverbrauchs und des Energiezustandes des Mobilfunkendgeräteakkus die Zeit bis zum Erreichen der nächsten Spannungsschwelle zum Aktivieren/Deaktivieren einzelner oder mehrerer oder bis zum Deaktivieren sämtlicher Anwendungen und damit bis zum Abschalten sämtlicher elektrischer Komponenten (36) berechnet wird.

13. Verfahren gemäß dem voranstehenden Patentanspruch 12,
**dadurch gekennzeichnet,**
**dass** die Abschaltzeit am Mobilfunkendgerät akustisch und/oder optisch und/oder haptisch einmalig oder dauerhaft angezeigt wird.

14. Verfahren gemäß einem der voranstehenden Patentansprüche 12 und 13,
**dadurch gekennzeichnet,**
**dass** am Mobilfunkendgerät akustisch und/oder optisch und/oder haptisch einmalig oder dauerhaft angezeigt wird, welche Anwendungen abgeschaltet wurden.

15. Verfahren gemäß einem der voranstehenden Patentansprüche 12 bis 14,
**dadurch gekennzeichnet,**
**dass** am Mobilfunkendgerät akustisch und/oder optisch und/oder haptisch einmalig oder dauerhaft angezeigt wird, dass Anwendungen abgeschaltet wurden.
